# EUROPEAN PATENT SPECIFICATION

(11) **EP 0 957 668 B1**
(45) Date of publication and mention of the grant of the patent: **09.04.2003**
(21) Application number: 98954836.7
(22) Date of filing: 04.11.1998
(51) Int. Cl.: A01B 79/00

(54) **MEANS FOR CONTROLLING A DRIVEN SOIL WORKING MACHINE ON THE BASIS OF INFORMATION DERIVED FROM A MAP**
KARTENINFORMATIONSBASIERTE STEUERUNGSVORRICHTUNG FÜR ANGETRIEBENE BODENBEARBEITUNGSMASCHINE
MOYEN DE COMMANDE D'UN ENGIN DE TRAVAIL DU SOL MU SUR LA BASE D'INFORMATIONS TIREES D'UNE CARTE

(30) Priority: 07.11.1997 NL 1007487
(43) Date of publication of application: 24.11.1999
(73) Proprietor: MAASLAND N.V., 3155 PD Maasland (NL)
(72) Inventor: VAN DER LELY, Olaf, CH-6300 Zug (CH); VAN DER LELY, Alexander, NL-3065 NA Rotterdam (NL); BOM, Cornelis, Johannes, Gerardus, NL-3181 VC Rozenburg (NL); DE GROEN, Franciscus, Johannes, Adrianus, NL-3225 CB Hellevoetsluis (NL)
(74) Representative: Corten, Maurice Jean F.M.
(86) International application number: PCT/NL98/00637
(87) International publication number: WO 99/023869

(56) References cited:
- EP-A- 0 208 892
- EP-A- 0 458 107
- EP-A- 0 749 677
- EP-A- 0 776 598
- EP-A- 0 838 141
- GB-A- 2 305 045

## Description

The invention relates to a soil working machine with drivable working members, in particular a rotary harrow provided with soil working members that are drivable about upwardly orientated axes.

Such a machine is known from the European patent application EP 0749677-A1. In this document a soil working machine is described coupled to a tractor. The power take off of the tractor drives the machine. The machine comprises sensors to measure the working depth and the number of revolutions of the driven soil working tools and sensors concerning the pull power. The tractor also comprises a DGPS-receiver for getting the actual position of the machine. Together with the positioning data, the data obtained by the sensors are stored on a data collector, like a magnet card. The tractor comprises a computer which can control the machine. For later years or for following working runs on the same field, the stored data can be used by this computer.

In the European patent application EP 0776598-A1 a rotary harrow is described with drivable working members, a frame and a roller arranged behind the working members. The roller is pivotable in height relative to the frame. By controlling this height, the working depth can be controlled. Electronic means are provided for determining the working depth. Automatically active control means are provided by means of which, depending on control signals of a processing unit, an adjusting element for the adjustment of the working depth is operated. Depending on the position of the rotary harrow on the field or depending on a soil condition observed, the working depth is automatically adjustable.

In the European patent application EP 0458107-A1 a computer system is described used for a combination of a tractor with an agricultural machine like a rotary harrow. This computer system can control the machine on the basis of data stored in this computer. It is possible to add or change this data for example via a keyboard or by adding a magnet card. Additional sensors can add data to the computer concerning the condition of the soil and the computer can use this data to adjust the amount of material being spread by a spreader.

In the British patent application GB 2305045-A a tractor is described with an electronic monitoring system comprising means for sensing parameters of the tractor including sensors for sensing the revolutions per unit time made by the power take off shaft. The tractor is fitted with a GPS satellite navigation system. Means are provided for combining the sensed parameters with positional information to produce a map of the parameters.

The invention aims at providing a soil working machine enabling the parcel to be cultivated as uniformly as possible.

In accordance with the invention this is achieved by the features of the characterizing part of claim 1. If, for example, there is supplied a signal to the control system from which signal there can be deduced that the machine is operative in an area where the soil is more compacted than in the rest of the parcel, then, the number of revolutions may be increased, so that the soil working members cultivate this subarea more intensively or a reinforced effect is obtained.

According to an inventive feature, the control system comprises a revolution variator for regulating the number of revolutions of the working members. According to an inventive feature, one or more soil working members can be provided with a separate revolution variator, which enables an individual adjustment of the soil working members. In this manner it is also possible to cultivate the soil at different degrees of intensity over the working width of the machine.

In accordance with again another inventive feature, the means comprise measuring means with the aid of which the condition and/or the composition of the soil can be determined. In this manner the condition and/or the composition of the soil can be determined on the spot during operation of the machine. According to the invention the measuring means comprise one or more torque sensors by means of which the torque of the working members is measured during operation. The signals supplied by the torque sensors can be used as information for the control system to vary the number of revolutions. It will be obvious that it is possible to provide each of the soil working members with a separate torque sensor, or to provide the machine with one torque sensor for all the soil working members or for groups of soil working members.

According to again another inventive feature, the means comprise a processing unit by means of which the signals supplied by the measuring means are processed into a map of the surface cultivated by the soil working machine. This map can e.g. be recorded in a smart card or a floppy or a similar data carrier, which can possibly be taken from the control system by the operator. The information stored therein can e.g. be used for working a parcel with a further agricultural machine.

According to a further inventive feature, the processing unit is adapted to divide the map into subareas having an approximately equal soil condition and/or soil composition and/or torque, c.q. an equal resistance, which the soil working machine encounters from the soil during operation.

According to another aspect of the invention, the means comprise inputting means with the aid of which a previously produced map of the soil to be cultivated by the soil working machine can be inputted into the control system. The inputting means can be designed e.g. as a disc-drive or a similar inputting device.

According to an inventive feature, in this manner the control system can regulate automatically the number of revolutions of the soil working members on the basis of the information supplied by the inputted map.

In accordance with again another aspect of the invention, the means comprise means for determining the position with the aid of which the position of the soil working machine can be determined on the parcel during operation.

According to a further inventive feature, the means for determining the position comprise a navigation system, such as DGPS, GPS, Lorean, dead reckoning, etc., or a combination of said systems. The actual position of the soil working machine determined by a navigation system as well as the information from the map regarding the condition and/or the composition of the soil is supplied to the control system which, on the basis thereof, regulates automatically the number of revolutions of the soil working members.

According to again another inventive feature, the means comprise a visual display unit showing the map during operation and the area in which the soil working machine is active. In this manner the driver of the vehicle to which the soil working machine is coupled can determine in which subarea the machine is active.

According to an aspect of the invention, the visual display unit is adapted to show the condition and/or the composition of the soil. This can take place e.g. by representing the various subareas in different colours and/or hatchings.

It will also be obvious that the means can also be produced and sold separately, i.e. without having been fitted to a soil working machine. Therefore the invention also relates to a control system and/or measuring means and/or a processing unit and/or inputting means and/or means for determining the position and/or a visual display unit that can be used in a soil working machine as described above.

The invention further relates to a method of regulating the number of revolutions of drivable soil working members of a soil working machine, in which method, once the position of the soil working machine on the parcel to be cultivated having been determined, on the basis of a previously produced map of the condition and/or the composition of the soil of the parcel to be cultivated, the number of revolutions of the soil working members is adjusted automatically, in order that an optimal cultivation of the soil by the soil working machine is obtained.

## Claims

1. A soil working machine with drivable working members, in particular a rotary harrow provided with soil working members that are drivable about upwardly orientated axes, **characterized in that** the soil working machine is provided with means that comprise a control system by means of which the number of revolutions of the soil working members during operation is regulated automatically on the basis of signals supplied to the control system regarding the condition and/or the composition of the soil to be cultivated.

2. A soil working machine as claimed in claim 1, **characterized in that** the control system comprises a revolution variator for regulating the number of revolutions of the working members.

3. A soil working machine as claimed in claim 1 or 2, **characterized in that** the means comprise measuring means with the aid of which the condition and/or the composition of the soil can be determined.

4. A soil working machine as claimed in claim 3, **characterized in that** the measuring means comprise one or more torque sensors by means of which the torque of the working members is measured during operation.

5. A soil working machine as claimed in claim 3 or 4, **characterized in that** the means comprise a processing unit by means of which signals supplied by the measuring means are processed into a map of the surface cultivated by the soil working machine.

6. A soil working machine as claimed in claim 5, **characterized in that** the processing unit is adapted to divide the map into subareas having an approximately equal torque, c.q. an equal resistance, which the soil working machine encounters from the soil during operation.

7. A soil working machine as claimed in any one of the preceding claims, **characterized in that** the means comprise inputting means with the aid of which a previously produced map of the soil to be cultivated by the soil working machine can be inputted into the control system.

8. A soil working machine as claimed in claim 7, **characterized in that** the control system is adapted to regulate automatically the number of revolutions on the basis of the information supplied by the map.

9. A soil working machine as claimed in any one of the preceding claims, **characterized in that** the means comprise means for determining the position with the aid of which the position of the soil working machine can be determined during operation.

10. A soil working machine as claimed in claim 9, **characterized in that** the means for determining the position comprise a navigation system, such as e.g. DGPS, GPS, Lorean, dead reckoning, etc., or a combination of said systems.

11. A soil working machine as claimed in any one of the preceding claims, **characterized in that** the means comprise a visual display unit showing the map and the area in which the soil working machine is active during operation of the soil working machine.

12. A soil working machine as claimed in claim 11, **characterized in that** the visual display unit is adapted to show differences in the condition and/or the composition of the soil.

13. A method of regulating the number of revolutions of drivable soil working members of a soil working machine during operation of the soil working machine, in which method, once the position of the soil working machine on the parcel to be cultivated having been determined, on the basis of a previously produced map of the condition and/or the composition of the soil of the parcel to be cultivated, the number of revolutions of the soil working members is adjusted automatically, in order that an optimal cultivation of the soil by the soil working machine is obtained.

## Patentansprüche

1. Bodenbearbeitungsmaschine mit antreibbaren Bearbeitungsgliedern, insbesondere Kreiselegge mit Bodenbearbeitungsgliedern, die um aufwärts gerichtete Achsen antreibbar sind,
**dadurch gekennzeichnet, daß** die Bodenbearbeitungsmaschine mit einer Vorrichtung versehen ist, die ein Steuersystem umfaßt, mittels dessen die Drehzahl der Bodenbearbeitungsglieder während des Betriebes auf der Basis von an das Steuersystem gelieferten Signalen bezüglich der Beschaffenheit und/oder der Zusammensetzung des zu bearbeitenden Bodens automatisch reguliert wird.

2. Bodenbearbeitungsmaschine nach Anspruch 1,
**dadurch gekennzeichnet, daß** das Steuersystem einen Drehzahlvariator zum Regulieren der Drehzahl der Arbeitsglieder umfaßt.

3. Bodenbearbeitungsmaschine nach Anspruch 1 oder 2,
**dadurch gekennzeichnet, daß** die Vorrichtung eine Meßvorrichtung umfaßt, mittels der die Beschaffenheit und/oder die Zusammensetzung des Bodens ermittelt werden kann.

4. Bodenbearbeitungsmaschine nach Anspruch 3, '
**dadurch gekennzeichnet, daß** die Meßvorrichtung einen oder mehrere Drehmomentsensoren umfaßt, mittels derer das Drehmoment der Bearbeitungsglieder während des Betriebs gemessen wird.

5. Bodenbearbeitungsmaschine nach Anspruch 3 oder 4,
**dadurch gekennzeichnet, daß** die Vorrichtung eine Verarbeitungseinheit umfaßt, mittels der von der Meßvorrichtung gelieferte Signale zu einer Karte der von der Bodenbearbeitungsmaschine bearbeiteten Oberfläche verarbeitet werden.

6. Bodenbearbeitungsmaschine nach Anspruch 5,
**dadurch gekennzeichnet, daß** die Verarbeitungseinheit dazu ausgebildet ist, die Karte in Unterbereiche von etwa gleicnem Drehmoment bzw. gleichem Widerstand zu unterteilen, den der Boden der Bodenbearbeitungsmaschine im Betrieb entgegensetzt.

7. Bodenbearbeitungsmaschine nach einem der vorhergehenden Ansprüche,
**dadurch gekennzeichnet, daß** die Vorrichtung eine Eingabevorrichtung umfaßt, mit deren Hilfe eine vorher erstellte Karte des von der Bodenbearbeitungsmaschine zu bearbeitenden Bodens in das Steuersystem eingegeben werden kann.

8. Bodenbearbeitungsmaschine nach Anspruch 7,
**dadurch gekennzeichnet, daß** das Steuersystem dazu ausgebildet ist, auf der Basis der durch die Karte gelieferten Information die Drehzahl automatisch zu regulieren.

9. Bodenbearbeitungsmaschine nach einem der vorhergehenden Ansprüche,
**dadurch gekennzeichnet, daß** die Vorrichtung eine Vorrichtung zur Positionsermittlung umfaßt, mittels der die Position der Bodenbearbeitungsmaschine im Betrieb ermittelt werden kann.

10. Bodenbearbeitungsmaschine nach Anspruch 9,
**dadurch gekennzeichnet, daß** die Vorrichtung zur Positionsermittlung ein Navigationssystem, wie z. B. DGPS, GPS, Loran, Kursrechnen usw., oder eine Kombination dieser Systeme umfaßt.

11. Bodenbearbeitungsmaschine nach einem der vorhergehenden Ansprüche,
**dadurch gekennzeichnet, daß** die Vorrichtung ein Datensichtgerät umfaßt, das die Karte und den Bereich anzeigt, in dem die Bodenbearbeitungsmaschine während des Betriebes der Bodenbearbeitungsmaschine aktiv ist.

12. Bodenbearbeitungsmaschine nach Anspruch 11,
**dadurch gekennzeichnet, daß** das Datensichtgerät dazu ausgebildet ist, Unterschiede in der Beschaffenheit und/oder der Zusammensetzung des Bodens anzuzeigen.

13. Verfahren zum Regulieren der Drehzahl von antreibbaren Bodenbearbeitungsgliedern einer Bodenbearbeitungsmaschine im Betrieb der Bodenbearbeitungsmaschine,
wobei bei dem Verfahren nach Ermittlung der Position der Bodenbearbeitungsmaschine auf der zu bearbeitenden Parzelle auf der Basis einer vorher erstellten Karte der Beschaffenheit und/oder der Zusammensetzung des Bodens der zu bearbeitenden Parzelle die Drehzahl der Bodenbearbeitungsglieder automatisch eingestellt wird, um eine optimale Bearbeitung des Bodens durch die Bodenbearbeitungsmaschine zu erzielen.

## Revendications

1. Engin de travail du sol avec éléments de travail manoeuvrables, en particulier une herse rotative fournie avec des éléments de travail du sol qui sont manoeuvrables autour d'axes orientés vers le haut, **caractérisé en ce que** l'engin de travail du sol est fourni avec des moyens qui comprennent un système de commande au moyen duquel le nombre de tours des éléments de travail du sol pendant le fonctionnement est régulé automatiquement sur la base de signaux transmis au système de commande relativement à l'état et/ou à la composition du sol à cultiver.

2. Engin de travail du sol selon la revendication 1, **caractérisé en ce que** le système de commande comprend un variateur de tours pour réguler le nombre de tours des éléments de travail.

3. Engin de travail du sol selon la revendication 1 ou 2, **caractérisé en ce que** -les moyens comprennent des moyens de mesure à l'aide desquels l'état et/ou la composition du sol peuvent être déterminés.

4. Engin de travail du sol selon la revendication 3, **caractérisé en ce que** les moyens de mesure comprennent un ou plusieurs capteurs de couple au moyen desquels le couple des éléments de travail est mesuré pendant le fonctionnement.

5. Engin de travail du sol selon la revendication 3 ou 4, **caractérisé en ce que** les moyens comprennent une unité de traitement au moyen de laquelle les signaux transmis par les moyens de mesure sont transformés en une carte de la surface cultivée par l'engin de travail du sol.

6. Engin de travail du sol selon la revendication 5, **caractérisé en ce que** l'unité de traitement est adaptée pour diviser la carte en sous-zones ayant un couple approximativement égal, c'est à dire une résistance égale, exercée depuis le sol sur l'engin de travail du sol pendant le fonctionnement.

7. Engin de travail du sol selon l'une quelconque des revendications précédentes, **caractérisé en ce que** les moyens comprennent des moyens d'entrée à l'aide desquels une carte du sol à cultiver par l'engin de travail du sol précédemment produite peut être introduite dans le système de commande.

8. Engin de travail du sol selon la revendication 7, **caractérisé en ce que** le système de commande est adapté pour réguler automatiquement le nombre de tours sur la base des informations tirées de la carte.

9. Engin de travail du sol selon l'une quelconque des revendications précédentes, **caractérisé en ce que** les moyens comprennent des moyens pour déterminer la position à l'aide desquels la position de l'engin de travail du sol peut être déterminée pendant le fonctionnement.

10. Engin de travail du sol selon la revendication 9, **caractérisé en ce que** les moyens pour déterminer la position comprennent un système de navigation, tel que par exemple DGPS, GPS, Lorean, à l'estime, etc., ou une combinaison desdits systèmes.

11. Engin de travail du sol selon l'une quelconque des revendications précédentes, **caractérisé en ce que** les moyens comprennent une unité d'affichage visuel montrant la carte et la zone dans laquelle l'engin de travail du sol est actif pendant le fonctionnement de l'engin de travail du sol.

12. Engin de travail du sol selon la revendication 11, **caractérisé en ce que** l'unité d'affichage visuel est adaptée pour montrer les différences d'état et/ou de composition du sol.

13. Procédé de régulation du nombre de tours des éléments manoeuvrables de travail du sol d'un engin de travail du sol pendant le fonctionnement de l'engin de travail du sol, procédé dans lequel, une fois que la position de l'engin de travail du sol sur la parcelle à cultiver a été déterminée, sur la base d'une carte de l'état et/ou de la composition du sol de la parcelle à cultiver précédemment produite, le nombre de tours des éléments de travail du sol est ajusté automatiquement, de façon à obtenir une culture optimale du sol par l'engin de travail du sol.
